# EUROPEAN PATENT APPLICATION

(11) **EP 4 310 156 A1**
(43) Date of publication of application: **24.01.2024**
(21) Application number: 22185840.0
(22) Date of filing: 19.07.2022
(51) Int. Cl.: C09J 163/00

(54) **ROOM TEMPERATURE CURABLE STABLE ADHESIVE COMPOSITION**

(71) Applicant: 3M Innovative Properties Company, Saint Paul, MN 55133-3427 (US)
(72) Inventor: Elgimiabi, Sohaib, 40629 Düsseldorf (DE); Cura, Dr. Elisabeth, 40223 Düsseldorf (DE); Pagliuca, Antonio, Bracknell, RG12 8HT (GB)
(74) Representative: Mathys & Squire

(57) **Abstract**

The present disclosure provides a curable adhesive composition precursor, comprising a first part (A) comprising
(i) at least one first epoxy curing agent;
(ii) at least one first curing aid comprising at least one ammonium salt; a second part (B) comprising
(i) at least one epoxy resin; and
(ii) optionally, at least one first impact modifier.

## Description

### Technical Field

The disclosure relates to curable two-part adhesive compositions precursor and the adhesive compositions obtained therefrom. Further, the present disclosure further relates to a method for adhesively connecting parts. Moreover, the present disclosure further relates to a use of the curable adhesive compositions and its precursors as described herein in industrial manufacturing and assembly operations, in particular in body-in-white processes in the automotive industry.

### Background

Adhesives have been used in many structural applications. Such structural applications have included vehicles assembly like automobile and aircraft assembly. For example, epoxy-based adhesives are well stablished in those applications. In applications in particular in the automotive industry, it is also established that epoxy-based adhesives need to exhibit high degree of toughness in order to improve impact resistant of the bonded joints. In general, it is expected in the art that this impact performance needs to cover a wide temperature range, including temperatures below -20 °C or even - 40 °C depending on the service temperature of bonded structure.

Furthermore, in several applications epoxy-based adhesives normally need to fulfill challenging requirements with regard to adhesive strength and mechanical properties at elevated temperatures, e.g. at temperatures as high as from 100 to 120 °C.

It has been described in the prior art that the conventional solution to meet those challenging requirements is the use of heat-curable epoxy adhesives. These are mostly so-called one-part systems that generally require curing elevated temperature. In addition, two-part systems have also been described. However, it is also known that these two-part systems oftentimes require to be post-cured after an initial curing step at temperature above 80 °C to develop full bonding strength. Also, the use of so-called curing accelerators or curing aids is known in order to lower the curing temperature. However, this may add further challenges, for instance with regard to the viscosity of the adhesive composition.

While there are presently numerous examples of structural adhesives commercially available for manufacturing operations in automotive industry such as body-in-white applications, there still exists a need for improved adhesives which do not require curing at elevated temperatures and/or do not require an additional curing step at elevated temperatures, which exhibit good workability, and which exhibit after curing at ambient temperatures good adhesive properties, and, desirable in particular for the automotive industry, good impact resistance.

### Summary

The present disclosure provides a curable adhesive composition precursor, comprising
a first part (A) comprising
   (i) at least one first epoxy curing agent;
   (ii) at least one first curing aid comprising at least one ammonium salt;
a second part (B) comprising
   (i) at least one epoxy resin; and
   (ii) optionally, at least one first impact modifier.

The present disclosure further provides a curable adhesive composition, obtained by curing part (A) and part (B) of the curable adhesive composition precursor as described herein.

Also, the present disclosure relates to a method for bonding parts, comprising the following steps:
(a) Providing an adhesive composition as described herein;
(b) Applying the adhesive composition onto at least part of a surface of a first part;
(c) Applying a second part onto the adhesive composition applied to the first part;
(d) Perform a curing step to cure the adhesive composition as described herein such as to adhesively bond the first part and the second part.

Furthermore, the present disclosure relates to a use of the curable adhesive composition precursor as described herein or of the curable adhesive composition as described herein for bonding parts.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of', but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The first aspect of the present disclosure is a curable adhesive composition precursor, comprising
a first part (A) comprising
   (i) at least one first epoxy curing agent;
   (ii) at least one first curing aid comprising at least one ammonium salt;
a second part (B) comprising
   (i) at least one epoxy resin; and
   (ii) optionally, at least one first impact modifier.

Curable adhesive composition precursors as the one according to the present disclosure are also known as 2-component compositions or 2k-compositions. It is understood that the first part (A) is physically separated from the second part (B) of the curable adhesive composition precursor. The first part (A) and second part (B) are combined and therefore mixed before the intended use according to the user's needs so as to obtain a curable adhesive composition. The present disclosure also covers a curable adhesive composition, obtained from the curable adhesive composition precursor and a cured composition obtained from curing the curable adhesive composition. The use of these 2k-compositions offers several advantages such as a longer shelf-life, the possibility to form a curable composition according to the user's needs, and a readily curable composition which itself offers further handling advantages for the user, in particular in the technical field of bonding metal parts in the specific requirements commonly found in body-in-white processes in the automotive industry.

The curable adhesive composition precursor according to the present invention may exhibit at least one or even a combination of desirable properties such as good handling properties such as desirable viscosities for commonly used application techniques, fast curing times of the curable adhesive composition obtained therefrom, good mechanical strength of the cured composition, in particular, good impact resistance at low temperatures in combination with good adhesive properties such as overlap shear strength at elevated temperatures. This combination ambient curing temperature, and general good handling and adhesive properties make the composition according to the present disclosure highly suitable for applications in the automotive industry as well as electronics or battery manufacture.

Epoxy curing agents suitable for use in the present disclosure are compounds which are capable of cross-linking (curing) the epoxy resin. Preferably, the epoxy curing agents as described herein are amine-based epoxy curing agents, due to the well-understood curing characteristics and general good commercial availability and the excellent results obtained. Suitable curing agents according to the present invention may be primary or secondary amines. The epoxy curing agent system present in part (A) comprises at least one first epoxy curing agent. Their is preferred that the at least one first epoxy curing agent is selected is selected from diamines, polyamidoamines, phenalkamides, phenalkamines, epoxy-amine adducts, polyetheramines, cycloaliphatic amines, and any combinations and mixtures thereof. In one preferred example, the at least one first epoxy curing agent is selected from multifunctional amine-based epoxy curing agents. In combination with the other ingredients of the curable adhesive precursor as described herein, it was found that multifunctional amine-based epoxy curing agents yielded desirable high temperature properties after curing. In another preferred example of the present disclosure, the at least one first epoxy curing agent is selected from polyether amines and epoxy-amine adducts, preferably selected from polyether amines-epoxy adducts, and any combinations and mixtures thereof. These compounds were also found to give good mechanical properties of the cured adhesive such as high overlap peel strength and the like.

It is further preferred that part (A) of the curable composition precursor further comprises at least one second epoxy curing agent different from the at least one first epoxy curing agent. The at least one second epoxy curing agent is preferably selected from diamines, polyamidoamines, phenalkamides, phenalkamines, epoxy-amine adducts, polyetheramines, cycloaliphatic amines and any combinations and mixtures thereof.

In particular aspect, the diamine for use herein may comprise the general structure: 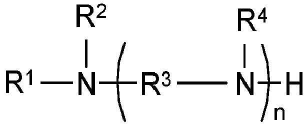 wherein
the residues R¹, R², and R⁴, independently from each other, may represent hydrogen or a hydrocarbon (such as an alkyl) or an alkoxy or a polyoxyalkyl residue containing about 1 to 15 carbon atoms;
R³ represents a polyether alkyl residue, preferably containing about 1 to 15 carbon atoms; n represents any integer from 1 to 10.

The residues R¹, R², and R⁴ are chosen such that the amine contains two primary amine groups.

In a particular aspect, the diamine is a polyether amine having two primary amine moieties. The polyether amine may have from 1 to 12, or even from 1 to 6 catenary ether (oxygen) atoms.

In a preferred aspect, the first epoxy curing agent comprises at least one polyether amine derived from polypropylene oxide or polyethylene oxide. Exemplary polyether amines suitable for use herein are commercially available under the trade designation JEFFAMINE from Huntsman Chemicals, or TTD (4,7,10-trioxatridecane-1,13-diamine) commercially available, for example, from BASF, Ludwigshafen Germany.

Similarly, the diamine for use herein is preferably a polymeric diamine such as an amidoamine or polyamidoamine. The polyamidoamine may be branched or unbranched aromatic or branched or unbranched aliphatic. Preferably, the polyamidoamine is an aliphatic polyamidoamine. Polyamidoamines which may be advantageously used in the context of the present disclosure are obtained as described in [0010] to [0029] of EP 249527 A1, the disclosure of which is incorporated herein by reference.

Preferably, the at least one first epoxy curing agent is selected from multifunctional amine-based epoxy curing agents, polyetheramines, and epoxy-amine adducts, and wherein the at least one second epoxy curing agent is selected from epoxy-amine adducts and polyetheramines.This particular combination of first epoxy curing agents and second epoxy curing agents was found, together with the other ingredients of the compositions as described herein, to give rise to good high temperature properties such as good overlap shear strength of the cured adhesive composition as described herein.

In this regard, it is preferred that part (A) comprises the at least one second epoxy curing agent in an amount of from 1 to 25 wt.-%, preferably from 2 to 20 wt.-%, and more preferably from 3 to 10 wt.-%, based on the total weight of part (A). Similarly, it is preferred that part (A) comprises the at least one first epoxy curing agent in an amount of from 20 to 90 wt.-%, preferably from 30 to 85 wt.-%, and more preferably from 40 to 80 wt.-%, based on the total weight of part (A).

Part (A) further comprises at least one curing aid comprising at least one ammonium salt. This has the effect that the viscosity of the adhesive composition remains in desirable ranges while the curing acceleration properties such as the ability to cure at ambient conditions of the adhesive compositions as described herein are not affected. This is in particular true when the at least one second curing aids further described herein are used in combination with the at least one curing aid. The at least one ammonium salt of the at least one first curing aid may comprise an inorganic or organic ammonium salt. In this regard, the at least one ammonium salt of the at least one first curing aid may comprise at least one organic or inorganic anion. Preferably, the at least one ammonium salt of the at least one first curing aid is an ammonium salt according to formula 1

NR¹R²R³R⁴X (formula 1)

wherein
each of R¹, R², R³ and R⁴ may be the same or different and are independently selected from H, linear or branched alkyl or alkoxy, preferably from H and linear or branched alkyl; X is selected from chloride, bromide, nitrate, sulfate, triflate, preferably from nitrate and triflate, more preferably is nitrate. Particularly preferred due to its advantageous properties and commercial availability is ammonium nitrate.

It is further preferred that the at least one first curing aid further comprises at least one metal salt. In this regard, it is preferred that the at least one metal salt comprises at least one anion selected from chloride, bromide, nitrate, sulfate, thiosulfate, triflate, phosphate, and any combinations and mixtures thereof, preferably from nitrate and triflate, and more preferably is nitrate. The at least one metal salt preferably comprises a metal cation selected from magnesium, calcium, strontium, preferably from magnesium and calcium, more preferably is calcium. Particularly preferred is calcium nitrate which yields generally good results with regard to accelerating the curing reaction with the epoxy compounds, resulting in good curing speed even at ambient conditions. In a particularly preferred example of the curable adhesive composition precursor according to the present disclosure, the at least one first curing aid comprises calcium nitrate and ammonium nitrate. This combination ensures excellent curing speed as well as good workability such as desirable viscosity of the curable adhesive compositions as described herein.

It is further preferred that part (A) further comprises at least one second curing aid different from the at least one first curing aid. Preferably, the at least one second curing aid different from the at least one first curing aid is selected from is selected form the group consisting of imidazoles, imidazole-salts, imidazolines or aromatic tertiary amines. Together with the at least one first curing aid as described herein, synergistic advantageous effects arise with regard to curing speed and application properties. Preferably, the at least one second curing aid different from the at least one first curing aid is selected from aromatic tertiary amines including those having the structure of formula (2): 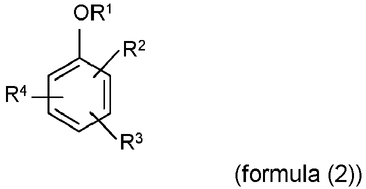 wherein
R¹ is H or alkyl, such as, e.g., methyl or ethyl, preferably methyl;
R² is CHNR⁵R⁶;
R³ and R⁴ may be, independently from each other, present or absent and when present R³ and R⁴ are CHNR⁵R⁶;
R⁵ and R⁶ are, independent from each other, alkyl, preferably CH₃ or CH₂CH₃.

The at least one first curing aid is preferably contained in part (A) in an amount in the range of from 0.1 to 20 wt.-%, preferably from 0.5 to 15 wt.-%, more preferably 1 to 10 wt.-%, based on the total weight of part (A). Similarly, the at least one second curing aid is contained in part (A) in an amount in the range of from 0.1 to 20 wt.-%, preferably from 0.5 to 15 wt.-%, more preferably 1 to 10 wt.-%, based on the total weight of part (A). Preferably, part (A) comprises the at least one first curing aid and the at least one second curing aid in a total amount in the range of from 0.2 to 40 wt.-%, preferably from 1 to 30 wt.-%, and more preferably from 2 to 20 wt.-%, based on the total weight of part (A). Advantageously, the ratio by weight of the at least one first curing aid to the at least one second curing aid may be in the range of from 10:1 to 1:10, preferably 5:1 to 1:5, more preferably 2:1 to 1:2, most preferred about 1:1.

Part (A) and optionally part (B) of the curable adhesive composition precursor according to the present disclosure may further comprise at least one inorganic filler material. Part (A) may comprise the at least one filler in an amount in the range of from 2 to 35 wt.-%, preferably from 5 to 30 wt.-%, and more preferably from 8 to 25 wt.-%, based on the total weight of part (A) of the composition described herein. Similarly, part (B) may comprise the at least one inorganic filler material in an amount the range of from 2 to 35 wt.-%, preferably from 5 to 30 wt.-%, and more preferably from 8 to 25 wt.-%, based on the total weight of part (B) of the composition as described herein. The inorganic filler material may have at least one advantageous effect such as reduced density of the composition, improved flow and/or workability of the compositions. Inorganic filler materials are preferred over organic filler materials since they do not compromise the compressive strength of the compositions. Preferably, part (A) and/or part (B) further comprises at least one filler selected from graphite powder, graphite flakes, carbon black, metal oxide, metal hydroxide, fumed silica, fused silica, aluminium oxide, aluminium hydroxide, calcium oxide, calcium carbonate, magnesium oxide, magnesium carbonate, glass beads, glass microspheres, preferably hollow glass microspheres and any mixtures and combinations thereof, preferably selected from graphite flakes, carbon black, fused silica, fumed silica, calcium carbonate, glass beads, glass microspheres, preferably hollow glass microspheres and any mixtures and combinations thereof.

Preferably, the at least one filler material comprises at least one silica compound. Silica compounds may have the effect of giving rise to improved flow, improved workability and increased of the compositions as described herein, without sacrificing mechanical strength or resistance to water and the like of the cured adhesives obtained therefrom. In this regard, it is preferred that the at least one silica compound is selected from fused silica, fumed silica, perlite, and any combinations and mixtures thereof. Silica compounds as described herein may preferably be employed in the form of silica particles. Preferably, the silica particles comprise fumed silica, preferably hydrophobically fumed silica, fused silica, amorphous silica particles, hollow silica particles, silica gels, calcium silicates, and any combinations thereof. Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Düsseldorf, Germany); AEROSIL R-202 (a hydrophobically fumed silica available from Evonik Industries, Germany); glass-beads class IV (250-300 microns): amorphous silica (available from 3M Deutschland GmbH in Neuss, Germany); MINSIL SF 20 (available from Minco Inc., 510 Midway, Tennessee, USA); amorphous, fused silica; and APYRAL 24 ESF (epoxysilane-functionalized (2 wt.-%) aluminium trihydrate available from Nabaltec GmbH in Schwandorf, Germany). Fused silica is available, for example, under the trade designation MINSIL from Minco Inc., Midway, USA.

It is further preferred that the at least one inorganic filler material in part (B), preferably also part (B), comprises inorganic beads. Inorganic beads or microspheres have the effect of yielding a certain control of the gap between the two parts adhesively connected by the adhesive compositions as described herein. Also, a reduced density of the compositions may also achieved, which is sometimes desirable. In particular, microspheres have the capability of reducing the density of a composition, i.e. the density of a composition as described including the microspheres is lower than the density of a composition without the microspheres. Preferably, the inorganic microspheres are hollow inorganic microspheres due to an even further reduced density of the resulting compositions. The microspheres are preferably selected glass bubbles or ceramic bubbles. By way of example, microspheres may be selected from a variety of materials including glass, silica, ceramic (including sol-gel derived) or zirconia. The inorganic filler materials may have an average particle size typically of less than 500 µm, or between 10 and 100 µm. Preferred hollow inorganic microspheres include glass microspheres which are commercially available, for example, from 3M Company under the trade designation Glass bubbles D32, MICROBUBBLES or Scotchlite D32/4500. Similarly, preferred inorganic beads comprise glass beads as also commercially available from 3M Company. Preferably, part (B) comprises glass beads in an amount in the range of from 0.01 to 10 wt.-%, preferably from 0.1 to 8 wt.-%, more preferably from 0.2 to 5 wt.-%, based on the total weight of part (B).

It is further preferred that part (B) comprises graphite flakes, preferably expandable graphite flakes, in an amount in the range of from 0.1 to 10 wt.-%, preferably from 0.5 to 8 wt.-%, and more preferably from 1 to 6 wt.-%, based on the total weight of part (B). This has the effect of improved failure mode, i.e. a cohesive failure mode (in contrast to an adhesive failure mode).

According to a particular aspect of the present disclosure, the second epoxy curing agent for use herein is selected form the group consisting of imidazoles, imidazole-salts, imidazolines or aromatic tertiary amines including those having the structure of formula: 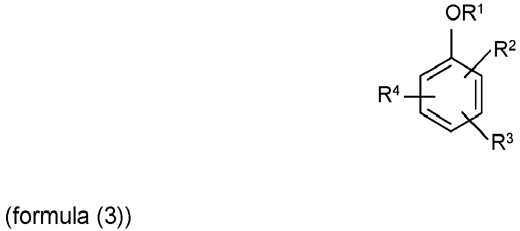 wherein
R¹ is H or alkyl, such as, e.g., methyl or ethyl, preferably methyl;
R² is CHNR⁵R⁶;
R³ and R⁴ may be, independently from each other, present or absent and when present R³ and R⁴ are CHNR⁵R⁶;
R⁵ and R⁶ are, independent from each other, alkyl, preferably CH₃ or CH₂CH₃.

Exemplary second epoxy curing agents for use herein includes tris-2,4,6-(dimethylaminomethyl)phenol commercially available under the trade designation ANCAMINE K54 from Air Products and Chemicals Inc.

Part (A) and/or part (B), preferably part A and (B), of the compositions as described herein comprise at least one first impact modifier and optionally at least one second impact modifier different from the at least one first impact modifier. This gives rise to the advantage of improved crash resistance of the cured adhesive bond over a broad range of temperatures. This is particularly important for automotive applications due to ever increasing demands to crash resistance of materials for the sake of passenger safety. Furthermore, a certain brittleness of the cured material at low temperatures may be avoided. In this regard, "different from the first impact modifier" means that the at least one second impact modifier is chemically or physically different from the at least one impact modifier. The at least one first and the at least one second impact modifier may independently be selected from the list of butadiene rubbers, nitrile rubbers, and core-shell rubbers. Preferably, the at least one first impact modifier is selected from the list of core-shell impact modifiers, preferably from core-shell rubbers. It is also preferred that the at least one second impact modifier is selected from core-shell impact modifiers and butadiene rubber impact modifiers, and any combinations and mixtures thereof. In a preferred example, the at least one first impact modifier and the at least one second impact modifier may be selected from core shell impact modifiers, wherein the at least one second core shell modifier has a different particle size than the at least one first impact modifier and/or the at least one second impact modifier has a different T_{G} than the at least one first impact modifier. In another preferred example, the at least one first impact modifier is selected from core shell impact modifiers, and the at least one second impact modifier is selected from butadiene rubbers and/or nitrile rubbers.

Exemplary compounds which may be advantageously used as butadiene rubbers or nitrile rubbers are carboxyl-, amine-, epoxy-, hydroxyl- or methacrylate-terminated butadiene, butadiene styrene or butadiene acrylonitrile copolymers, preferably amine terminated butadiene styrene or butadiene acrylonitrile copolymers. Such impact modifiers are commercially available, for example, under the trade designations Hypro CTBN, ATBN, ETBN, HTB or VTBNX from CVC Thermoset Specialities and Hycar ATBN from Amerald Materials, or of the MX Series from Kaneka such as MX 257.

With regard to the core-shell rubber as impact modifier, any core-shell rubber impact modifier commonly known in the art may be used in the context of the present disclosure. In a typical embodiment, the core-shell rubber impact modifier is a composite material configured by materials where the core portion on the inside and the shell portion on the outside are mutually different. Herein, the term "different materials" refers to materials where the composition and/or properties are mutually different, and therefore includes materials where the same type of resins are used but the molecular weights are mutually different, and the like.

From the perspective of favorably achieving a toughening effect on the compositions as described herein, the Tg of the shell portion is preferably higher than the Tg of the core portion. In this case, while flexibility is provided to the cured epoxy adhesive because the core portion which has a relatively low Tg functions as a centralized point of stress, the shell portion suppresses unwanted agglomeration of the core-shell rubber, and thus the core-shell impact modifier can be uniformly dispersed in the compositions as described herein.

Examples of the core-shell rubber impact modifier include methyl methacrylate - butadiene copolymer, methyl methacrylate - butadiene - styrene copolymer, methyl methacrylate - acrylonitrile - butadiene - styrene copolymer, methyl methacrylate - acrylic rubber copolymer, methyl methacrylate - acrylic rubber - styrene copolymer, methyl methacrylate - acrylic butadiene rubber copolymer, methyl methacrylate - acrylic butadiene rubber - styrene copolymer, methyl methacrylate - (acrylic silicone IPN rubber) copolymer, and the like, but are not restricted thereto. Methyl methacrylate - butadiene copolymer, methyl methacrylate - butadiene - styrene copolymer, and methyl methacrylate - acrylic butadiene rubber - styrene copolymer can be advantageously used as the core-shell toughening agent.

The core-shell impact modifier is normally in the form of fine particles, and the average value (weight average particle diameter) of the primary particle diameter thereof is generally approximately 0.05 micrometers or higher or approximately 0.1 micrometers or higher to approximately 5 micrometers or lower or approximately 1 micrometers or lower.

Preferably, the core-shell rubber can be used in a state dispersed in a matrix. It is preferred that the matrix is an epoxy resin. A matrix with favorable affinity to either first or second epoxy resin as described herein is particularly preferable from the perspective of favorable dispersion of the core-shell rubber in the composition as described herein. Examples of the matrix can include epoxy resins (such as bisphenol A and the like).

The core-shell impact modifier can be a commercial product that is provided as a resin modifying agent or the like, and examples include BTA 751 (commercially available from Dow Chemical) as a methyl methacrylate-butadiene-styrene (MBS) type core-shell resin, MX-153 (commercially available from Kaneka) as a resin where methyl methacrylate-butadiene-styrene (MBS) dispersed in bisphenol A diglycidyl ether), and MC-257 (commercially available from Kaneka) as a butadiene core-shell resin,dispersed in epoxy, and F351 (commercially available from Aika Industries) as the acrylic core-shell resin, Paraloid 2650A (butadiene rubber), Hycar ATBN (CVC Chemicals, liquid butadiene rubber), and the like. Without wishing to be bound by theory, it is believed that the core-shell polymer rubber beneficially impacts, in particular, the low temperature adhesion properties and impact resistance of the compositions described herein.

With regard to the effects brought about the presence of the at least one first impact modifier in the compositions as described herein, it is preferred that the impact modifier is contained in an amount in part (A) and (B) combined in the range of from 10 to 60 wt.-%, preferably from 15 to 55 wt.-%, and more preferably from 20 to 50 wt.-%, based on the total weight of part (A) and part (B) combined..

The second part (B) of the curable adhesive composition precursor according to the present disclosure comprises at least one first epoxy resin, and optionally at least one second epoxy resin. Suitable epoxy resins for use herein will be easily identified by those skilled in the art, in the light of the present description.

The epoxy resin for use herein is not particularly limited. Epoxy resins are polymers having one or more epoxy-functionality. Typically but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxy-groups-containing polymers. The epoxyfunctionalities allow the resin to undertake cross-linking reactions. The epoxy resins may have an average epoxy-functionality of at least 1, greater than one, or of at least 2.

Any epoxy resins well known to those skilled in the art may be used in the context of the present disclosure. Epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane,dihydroxydiphenyldimethylmethane, dihydroxydiphenylethylme thylmethane, dihydroxydiphenylmethylpropylmethane, dihydroxydiphenylethylphenylmethane,dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by the formula wherein n denotes the repeating unit (in case of n= 0 the formula below represents the diglycidyl ether of bisphenol A):

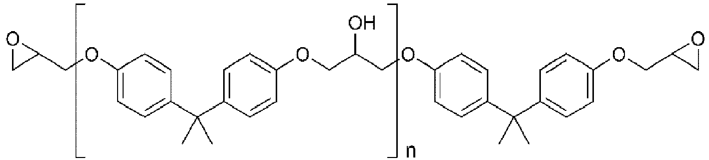

Typically, the epoxy resins are blends of several resins. Accordingly, n in the formula above may represent an average value of the blend, and may not be an integer but may include values like, for example and not limited thereto, 0.1 to 2.5.

Typically, the epoxy resin is liquid. The epoxy resins may include solid epoxy resins, used in dissolved form, or dispersed, for example in another liquid resin. Preferably, the epoxy resin is liquid at ambient conditions (23 °C, 1 bar). The epoxy resins may contain halogens, preferably bromine atoms to make them less flammable.

Examples of suitable and commercially available epoxy resins include diglycidylether of bisphenol A (available under the trade designation EPON 828, EPON 830, EPON 1001 or EPIKOTE 828 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Cycloaliphatic epoxy resins are commercially available under the trade designation EPINOX (Hexion Specialty Chemicals GmbH).

Preferably, the amount of the at least one first epoxy resin in part (B) and the at least one impact modifier in part (B) add up to an amount in the range of from 30 to 80 wt.-%, preferably from 35 to 75 wt.-%, more preferably from 40 to 70 wt.-%, based on the total weight of part (B). It is further preferred that the amount of the at least one first epoxy resin in part (B) and the at least one impact modifier in part (B) add up to an amount in the range of from 30 to 80 wt.-%, preferably from 35 to 75 wt.-%, more preferably from 40 to 70 wt.-%, based on the total weight of part (B).

Part (B) of the curable adhesive composition precursor according to the present disclosure may further comprise at least one second epoxy resin which is distinct from the first epoxy resin, i.e. chemically different. The chemical difference to the first epoxy resins may give rise to further differences to the first epoxy resins.

For example, the at least one second epoxy resin may be a multifunctional epoxy resin, preferably selected from triglycidyl ethers, tetraglycidyl ethers and pentaglycidyl ethers. This may be a single epoxy resin or may also be a combination of two or more epoxy resins. In a preferred embodiment, the equivalent weight of the trifunctional, tetrafunctional or pentafunctinal epoxy resin is approximately 60 or higher, or approximately 70 or higher, or approximately 80 or higher from the perspective of ease of procurement and reaction properties, and is approximately 1000 or lower, or approximately 500 or lower, or approximately 300 or lower from the perspective of the heat resistance of the cured epoxy adhesive.

Preferred examples of trifunctional epoxy resins used herein include glycidyl amine type epoxy resins, glycidyl phenol type epoxy resins, and the like. Examples of glycidyl amine type epoxy resins include triglycidyl aminophenol epoxy compounds, triglycidyl aminocresol epoxy compounds. Examples of glycidyl phenol type epoxy resins include phenol novolac epoxy compounds, triphenyl methane triglycidyl ether compounds, and the like. Epoxy resins which may be employed as trifunctional (or higher) second epoxy resins as described herein are commercially available under the trade designations TACTIX and ARALDITE from Huntsman. It is also preferred that at least one of the at least one second epoxy resin is selected from the group commonly known to the skilled person as novolac epoxy resins. For example, well-known Novolac compounds are ortho-ortho, ortho-para and para-para methylene bridged phenolic compounds. Examples are the reaction products of phenol and formaldehyde. Novolac epoxy resins may be obtained, e.g. from the reaction of epichlorhydrin and said phenol-formaldehyde novolac compounds. Novolac epoxy compounds generally have multi-epoxy functionalities of greater than 1, greater than 2, or even greater than 3 as defined above. Epoxy novolac resins as described herein may be liquid or semi-solid. Examples of suitable and commercially available novolac epoxy resins are the novolac epoxy resins available from Dow Chemicals, e.g. under the trade designation D.E.N.

It is also preferred that the at least one second epoxy resin is an epoxy resin comprising additional functional moieties. Functional moieties are moieties which may react with other functional moieties such as epoxy moieties. The presence of additional functional moieties in the at least one second epoxy resin may therefore enhance the reactivity and/or the ability to crosslink with other epoxy resins such as the at least one first epoxy resin. This may be enhance the hardness, resistance to water and/or organic solvents, resistance to corrosion, resistance to mechanical influences and the like of the adhesives obtained from the compositions as described herein. Reactive moieties as described herein may be moieties selected from alcohol, amines (in particular secondary amines), thiols, sulphides, and the like. Exemplary and preferred epoxy resins modified with reactive moieties are commercially available under the trade designation Epalloy (such as Epalloy 7200) from CVC Chemicals.

Using the combination of first and second epoxy resins as described herein may give rise to particularly desirable combination of properties of the cured composition such as high mechanical strengths and favourable properties such as high overlap shear strength and high peel strength, even at elevated temperatures. In addition, the combination of said first and second epoxy resins as described herein may also accelerate the cure rate without sacrificing mechanical strengths of the obtained adhesives.

It is preferred that part (B) contains the at least one multifunctional resin in an amount in the range of from 5 to 45 wt.-%, preferably from 10 to 40 wt.-%, and more preferably from 15 to 35 wt.-%, based on the total weight of part (B).

It is further preferred that part (B) of the curable adhesive precursor according to the present disclosure comprises an epoxy-based reactive diluent. Reactive diluents are epoxy-containing molecules. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the flow characteristics of the curable compositions as described herein.

In a particular aspect of the present disclosure, wherein the epoxy-based reactive diluent for use herein has a saturated or unsaturated cyclic backbone, and preferably comprises glycidyl ether as reactive terminal end portions.

According to a preferred aspect, the epoxy-based reactive diluent for use herein is selected from the group consisting of diglycidyl ether of resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion) and the "Epodil" series (available from Air Products and Chemical Inc, Allentown, PA, USA) including in particular EPODIL 746, EPODIL 747, EPODIL 748 and EPODIL 757.

It is further preferred that part (A) and/or part (B) further comprises at least one wetting agent and/or at least one reactive diluent. Preferably, the at least one wetting agent is selected from silanes, preferably from epoxy silanes. It is preferred that part (B) comprises a combined amount of the at least one wetting agent and at least one reactive diluent in the range of from 0.5 to 20 wt.-%, preferably from 1 to 15 wt.-%, more preferably from 2 to 10 wt.-%, based on the total weight of part (B).

Part (B) further may further comprise at least one viscosity modifier, preferably selected from partially or fully hydrogenated epoxy resins, more preferably from hydrogenated bisphenol A and/or bisphenol F diglycidyl ethers. Adding partially or fully hydrogenated epoxy resins to part (B) of the curable adhesive precursors as described herein has the effect of reducing the viscosity of part (B) and the curable adhesive composition, respectively. This is particularly advantageous when preparing part (B), mixing part (B) with part (A) and applying the curable composition on a substrate. Accordingly, the partially or fully hydrogenated epoxy resin may be called "viscosity modifier" in the context of the present disclosure. Preferably, hydrogenated bisphenol A and/or bisphenol F diglycidyl ethers are employed. For example, a hydrogenated bisphenol A diglycidyl ether resin is commercially available from Hexion under the trade designation "Eponex" such as "Eponex 1510". When present, the viscosity modifier is contained in part (B) of the curable adhesive composition precursor according to the present disclosure in an amount of from 0.2 to 20 wt.-%, preferably from 1 to 15 wt.-%, more preferably from 2 to 10 wt.-%, based on the total weight of part (B).

It is preferred that the ratio by volume of part (B) to part (A) is in the range of from 10:1 to 1:5, preferably from 6:1 to 1:3, more preferably from 4:1 to 1:1, and even more preferably is about 2:1. This may be achieved by containing part (A) and part (B) in an applicator well-known in the art comprising two separate cartouches (i.e. part (A) in one cartouche and part (B) in the other cartouche) and a mixing nozzle. As such, volumetric ratios are comprised herein. Also, storage of part (A) and part (B) in two separate tanks and pumping the parts into a mixing nozzle according to the present circumstances is also comprised herein. It is also understood that the advantageous effects of the compositions according to the present disclosure are only achieved within these mixing ratios. For example, using a lower amount of part (A) may compromise both curing speed of the curable adhesive composition as well as the resistance of the adhesive obtained therefrom. It is also understood that using different ratios within the range as described herein will influence the properties of the curable adhesive composition and the cured composition. For example, the viscosity of the curable adhesive composition may be adjusted. Also, the flexibility of the cured adhesive may be adjusted according to the requirements of the corresponding application.

The present disclosure further provides a curable adhesive composition, obtained from combining parts (A) and (B) of the curable adhesive composition precursor as described herein. Combining as used herein has the meaning commonly used in the art for two-component compositions, i.e. combining both parts and mixing afterwards or mixing and combining in one step. This is often the case in mixing nozzles well-known in the art and commercially used and available for this purpose. The curable adhesive composition is preferably prepared directly before its intended use, i.e. the application onto a surface of a substrate. Due to the properties of the compositions as described herein, the surface is preferably a metal surface such as a steel sheet or a steel part of a body of a vehicle such as a car. After application and subsequent curing of the adhesive composition according to the present disclosure, a strong adhesive bond is obtained between the two substrates.

The curable adhesive exhibits properties highly desirable in applications in the automotive industry, the commercial transportation industry or the electronics industry. It is preferred that the curable adhesive composition according to the present disclosure exhibits after curing the curable composition exhibits an overleap shear strength according to DIN EN 1465 at 80 °C of at least 11 MPa, preferably of at least 12 MPa, and more preferably of at least 13 MPa, and/or an overleap shear strength according to DIN EN 1465 at 100 °C of at least 8 MPa, preferably of at least 9 MPa, and more preferably of at least 10 MPa, and/or an impact peel according to ISO 11343 at - 20 °C of at least 17 MPa, preferably of at least 18 MPa, and more preferably of at least 20 MPa.

Furthermore, the present disclosure provides a method for bonding parts,
a method for bonding parts, comprising the following steps:
(a) Providing an adhesive as described herein;
(b) Applying the adhesive composition onto at least part of a surface of a first part;
(c) Applying a second part onto the adhesive composition applied to the first part;
(d) Perform a curing step to cure the adhesive composition as described herein such as to adhesively bond the first part and the second part.

Preferably, the the material of the first part and/or of the second part is selected from metal, polymeric materials, carbon fiber, glass fiber, glass, wood, ceramic materials, composite materials, preferably from metal, polymeric materials, carbon fiber and composite materials. Preferably, the metal is selected from metal is selected from steel, aluminium, magnesium, titanium, zinc, and any combinations and alloys therefrom, preferably from aluminium and steel, and more preferably from steel, aluminium and its alloys.

It is preferred that the curing step is carried out a temperature in the range of from 10 to 40 °C, preferably from 14 to 35 °C, and more preferably from 18 to 30 °C, and even more preferably at ambient temperature. This has the advantage that no additional heating step is required to achieve full bond strength, resulting in savings with regard to time, equipment and energy usually required for curing.

Due to the excellent suitability of the curable adhesive composition precursors according to the present disclosure and the curable adhesive compositions obtained therefrom for bonding parts while curing at ambient conditions to good adhesive properties, the present disclosure further provides a use of the curable adhesive compositions and its corresponding precursors for bonding, joining or sealing parts, preferably of bonding metal and/or composite parts in manufacturing operations in the automotive industry, the electronic industry and/or the commercial transportation industry. The metals and parts comprised in the use as described herein are the same as disclosed herein in conjunction with the method according to the present disclosure. Preferably, the use as described herein is a body-in-white process, battery casings, electrical vehicles, in the automotive industry.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### EXAMPLES

### Materials used:

| Description | Raw Materials |
|---|---|
| Base epoxy resin | Epikote 828; D.E.R 331; Epilox AF-1850 |
| Toughened epoxy resin | Kaneka MX 154, MX 257, MX 153 |
| Flexible epoxy resin | Cardolite 514S; Eponex 1510 |
| Wetting agent | Epodil 757, Epoxy silane |
| Multi-functional epoxy resin | Araldite MY 721, Araldite MY 0500, Epalloy 9000 |
| Graphite Flakes | Expandable graphite ES 100 C10, ES 250 B5 |
| Glass beads | Glass beads 90 - 150 micrometers, 150 - 300 micrometers |
| Fillers | Carbon black, Fumed silica, Calcium carbonate, Fused Silica |
| Amine adduct | Prepreaction of Polyether diamine and toughened epoxy (Baxxodur EC 130/Kaneke MX 154) |
| Multifunctional Aliphatic amine | Ancamine 2422 |
| Curing aids | Ancamine K54, Versamine EH50, Calcium ammonium nitrates, Calcium nitrates |

### Test Methods

### Cure rate

Cure rate was determined by measuring overlap shear strengths as set forth below (apart from the curing procedure described). The samples were coated with the mixed adhesive compositions and allowed to cure at room temperature. Overlap shear strengths was then tested after certain intervals. Comparing the shear strength over time provides an indication of the cure rate, i.e. a comparison of cure rate of different examples and comparative examples over time.

### Overlap Shear Strength according to DIN EN 1465 (issued 2009)

Overlap shear strength is determined according to DIN EN 1465 using a Zwick Z050 tensile tester (commercially available by Zwick GmbH & Co. KG, Ulm, Germany) operating at a cross head speed of 10 mm/min on dry lubed coated aluminium substrates having the following dimension 100 mm X 25mm X 0.8 mm and coated with 3 g/m² Oil (PL 3802-39S commercially available from Fuchs Petrolub AG, Germany). For the preparation of an Overlap Shear Strength test assembly the epoxy film to be tested (having a thickness of 0.4 mm) is applied on one end of a first steel strip and covered by a second steel strip forming an overlap joint of 10 mm. The overlap joints are then clamped together using two binder clips and the test assemblies placed into an air circulating oven with a minimum baking cycle of 20 min at 160 °C and a maximum bake cycle of 45 min at 200 °C. Hereby the test assemblies are heated up and cooled down using 3 °C/minute ramps. Test assemblies are then conditioned for 24 hours at ambient condition 23 +/-2 °C and 50 +/- % % relative humidity before testing. The tests assemblies are placed prior to testing on the Zwick tensile tester into an environmental chamber (commercially available by RS Simulatoren, Oberhausen, Germany) and the Overlap shear strength measured at room temperature (23°C +/- 2°C). 3 samples are measured for each of the examples at the three different test temperatures and results averaged and reported in MPa.

### Impact peel analysis

Analysis was carried out according to DIN EN ISO 11343. Substrate was stainless steel, substrate thickness was 0.8 mm. Sample width was 20 mm. Application was carried out at 35 °C and 24 h in joined state. Curing was carried out at 180 °C for 30 min. Testing equipment used was Instron VHS 50/2, testing speed was 2 m/s.

### Preparation of part (A) and part (B)

The ingredients as set forth in tables 1 and 2 were used to prepare part (A) and part (B) according to the procedures set forth below.

**Table 1: Composition of part (A). All ratios given in wt.-%.**

| Ingredients | Ex. 1 |
|---|---|
| Amine Adduct | 74 |
| Multi-functional aliphatic amine | 5 |
| Cure accelerator | 10 |
| Fillers | 11 |

**Table 2: Composition of part (B). All ratios given in wt.-%.**

| **Raw material part (B)** | **Ex. 1** |
|---|---|
| Toughened epoxy resin | 60 |
| Multi-functional epoxy resin | 20 |
| Flexible epoxy resin | 7 |
| Graphite flakes | 2 |
| Wetting agent and diluent | 5 |
| Glass beads | 1 |
| Fillers | 5 |

### Part A:

Part (A) was prepared by adding the calcium nitrate/ammonium nitrate to the main curing agent and mixed for 2 minutes in a speed mixer (3000 U/min). After complete dispersion of the calcium nitrate/ammonium nitrate the fillers were then added and mixing continued for further 2 minutes. This was followed by addition and mixing of ancamine K54. In a last step, part (A) was degassed for 2 minutes under vacuum while mixing. The degassed part A was then filled into one side of a 200 mL dual Pac cartridge.

### Part B:

The base resin was manufactured by mixing the toughened epoxy resin with the multifunctional epoxy resin and the flexible epoxy resin in speed mixer for 1 minute. The fillers, the graphite flakes, the wetting agents and diluent were added then step-wise and mixed several times until a homogeneous mixture was obtained. The mixture is then degassed for 2 minutes under vacuum while mixing. The degassed part B was filled into the other side of the dual Pac cartridge. The mixing ratios part (A) to part (B) by volume were 1:2.

The adhesive properties of ex. 1 were then evaluated. In particular, impact peel at low temperatures and overlap shear strength were determined. As comparative examples, commercially available adhesives were used, i.e. comp. ex. 1 (3M SA 9822) and comp. ex. 2 (SA 9844). The results are summarized in table 3.

**Table 3: Test results.**

| **Evaluation Parameters** | **Ex. 1** | **Comp. ex. 1** | **Comp. ex. 2** |
|---|---|---|---|
| Cure condition | RT | 24 h RT + 30 min 115 °C | RT |
| Impact Peel on aluminum panels at -20 °C [MPa] | 22 | 15 | 10 |
| Overlap shear strength at 80 °C [MPa] | 14 | 10 | 10 |
| Overlap shear strength at 100 °C [MPa] | 12 | 5 | 3 |

## Claims

1. A curable adhesive composition precursor, comprising
a first part (A) comprising
(i) at least one first epoxy curing agent;
(ii) at least one first curing aid comprising at least one ammonium salt;
a second part (B) comprising
(i) at least one epoxy resin; and
(ii) optionally, at least one first impact modifier.

2. The curable adhesive composition precursor according to claim 1 1, wherein the at least one first epoxy curing agent is selected from multifunctional amine-based epoxy curing agents.

3. The curable adhesive composition precursor according to claim 1 or claim 2, wherein the curable composition precursor further comprises at least one second epoxy curing agent different from the at least one first epoxy curing agent, preferably selected from diamines, polyamidoamines, phenalkamides, phenalkamines, epoxy-amine adducts, polyetheramines, cycloaliphatic amines and any combinations and mixtures thereof, more preferably selected from polyether amine-epoxy adducts.

4. The curable adhesive composition precursor according to any one of the preceding claims, wherein the at least one ammonium salt of the at least one first curing aid comprises at least one organic or inorganic anion.

5. The curable adhesive composition precursor according to any one of the preceding claims, wherein the at least one ammonium salt of the at least one first curing aid is an ammonium salt according to formula 1
NR¹R²R³R⁴X formula 1
wherein
each of R¹, R², R³ and R⁴ may be the same or different and are independently selected from H, linear or branched alkyl or alkoxy, preferably from H and linear or branched alkyl;
X is selected from chloride, bromide, nitrate, sulfate, triflate, preferably from nitrate and triflate, more preferably is nitrate.

6. The curable adhesive composition precursor according to any one of the preceding claims, wherein the at least one first curing aid further comprises at least one metal salt, preferably wherein the at least one metal salt comprises at least one anion selected from chloride, bromide, nitrate, sulfate, thiosulfate, triflate, phosphate, and any combinations and mixtures thereof, preferably from nitrate and triflate, and more preferably is nitrate.

7. The curable adhesive composition precursor according to claim 6, wherein the at least one first curing aid comprises calcium nitrate and ammonium nitrate.

8. The curable adhesive composition precursor according to any one of the preceding claims, wherein part (A) further comprises at least one second curing aid different from the at least one first curing aid, preferably selected form the group consisting of imidazoles, imidazole-salts, imidazolines or aromatic tertiary amines.

9. The curable adhesive composition precursor according to claim 8, wherein the at least one second curing aid different from the at least one first curing aid is selected from aromatic tertiary amines including those having the structure of formula: 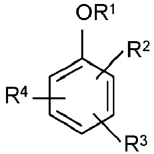 wherein
R¹ is H or alkyl, such as, e.g., methyl or ethyl, preferably methyl;
R² is CHNR⁵R⁶;
R³ and R⁴ may be, independently from each other, present or absent and when present R³ and R⁴ are CHNR⁵R⁶;
R⁵ and R⁶ are, independent from each other, alkyl, preferably CH₃ or CH₂CH₃.

10. The curable adhesive composition according to any one of the preceding claims, wherein part (B) further comprises at least one multifunctional epoxy resin, preferably selected from triglycidyl ethers, tetraglycidyl ethers and pentaglycidyl ethers.

11. The curable adhesive composition precursor according to any one of the preceding claims, wherein part (A) and/or part (B), preferably part A and (B), further comprises at least one impact modifier.

12. The curable adhesive composition precursor according to any one of the preceding claims, wherein part (A) and/or part (B) further comprises at least one filler selected from graphite powder, graphite flakes, carbon black, metal oxide, metal hydroxide, fumed silica, fused silica, aluminium oxide, aluminium hydroxide, calcium oxide, calcium carbonate, magnesium oxide, magnesium carbonate, glass beads, glass microspheres, preferably hollow glass microspheres and any mixtures and combinations thereof, preferably selected from graphite flakes, carbon black, fused silica, fumed silica, calcium carbonate, glass beads, glass microspheres, preferably hollow glass microspheres and any mixtures and combinations thereof.

13. A curable adhesive composition, obtained from combining part (A) and part (B) of the curable adhesive precursor according to any one of the preceding claims.

14. A method for bonding parts, comprising the following steps:
(a) Providing an adhesive composition according to claim 13;
(b) Applying the adhesive composition onto at least part of a surface of a first part;
(c) Applying a second part onto the adhesive composition applied to the first part;
(d) Perform a curing step to cure the adhesive composition such as to adhesively bond the first part and the second part.

15. Use of the curable adhesive composition precursor according to any one of claims 1 to 12 or of the curable adhesive composition according to claim 13 for bonding, joining and/or sealing parts, preferably bonding metal and/or composite parts in manufacturing operations in the automotive industry and/or commercial transportation industry.
